# EUROPÄISCHE PATENTSCHRIFT

(11) **EP 0 708 786 B1**
(45) Veröffentlichungstag und Bekanntmachung des Hinweises auf die Patenterteilung: **26.02.1997**
(21) Anmeldenummer: 94920465.5
(22) Anmeldetag: 27.06.1994
(51) Int. Cl.: C08F 6/10, C08F 6/16, C08F 8/06, C08F 26/02

(54) **VERFAHREN ZUR ELIMINIERUNG VON NITRILGRUPPENHALTIGEN VERUNREINIGUNGEN AUS POLYMERISATEN**
METHOD OF ELIMINATING IMPURITIES CONTAINING CYANIDE GROUPS FROM POLYMERS
PROCEDE PERMETTANT D'ELIMINER DES IMPURETES RENFERMANT DES GROUPES NITRILE CONTENUES DANS DES POLYMERISATS

(30) Priorität: 12.07.1993 DE 4323234
(43) Veröffentlichungstag der Anmeldung: 01.05.1996
(73) Patentinhaber: BASF AKTIENGESELLSCHAFT, 67056 Ludwigshafen (DE)
(72) Erfinder: DENZINGER, Walter, D-67346 Speyer (DE); HARTMANN, Heinrich, D-67117 Limburgerhof (DE); KROENER, Michael, D-68309 Mannheim (DE); NILZ, Claudia, D-67127 Roedersheim-Gronau (DE)
(86) Internationale Anmeldenummer: EP9402082
(87) Internationale Veröffentlichungsnummer: WO9502615

(56) Entgegenhaltungen:
- DE-A- 3 724 709
- CHEMICAL ABSTRACTS, Band 117, Nr. 24, ver!ffentlicht 1992, 14 Dezember (Columbus, Ohio, USA), H. SHIRAI et al. "Preparation of Polymer Metal Complexes", Seite 14, Nr. 234 759r; & JP,A2,04 120 102.

## Beschreibung

Die Erfindung betrifft ein Verfahren zur Eliminierung von nitrilgruppenhaltigen Verunreinigungen aus Polymerisaten, die acyclische N-Vinylcarbonsäureamid- und/oder Vinylamineinheiten enthalten.

Aus der US-A-4 421 602 sind Polymerisate bekannt, die N-Vinylformamid- und Vinylamineinheiten enthalten. Die Polymerisate werden durch Polymerisieren von N-Vinylformamid und anschließende partielle Hydrolyse der Polyvinylformamide unter Einwirkung von Säuren oder Basen hergestellt.

Aus der EP-A-0 216 387 ist bekannt, daß man Copolymerisate aus 5 bis 90 mol-% N-Vinylformamid und 95 bis 10 mol-% eines ethylenisch ungesättigten Monomeren aus der Gruppe Vinylacetat, Vinylpropionat, der C₁- bis C₄-Alkylvinylether, N-Vinylpyrrolidon, der Ester, Nitrile und Amide von Acrylsäure und Methacrylsäure in zumindest partiell hydrolysierter Form, bei der bis zu 100 mol-% der Formylgruppen aus dem Polymerisat abgespalten sein können, dem Papierstoff vor der Blattbildung in Mengen von 0,1 bis 5 Gew.-%, bezogen auf trockene Fasern, als Naß- und Trockenverfestigungsmittel für Papier zusetzt.

Vinylamineinheiten enthaltende Polymerisate werden darüber hinaus als Dispergiermittel für Pigmente, als Belagsverhinderer für die Wasserbehandlung, als Waschmitteladditiv, als Flockungsmittel, Retentions- und Entwässerungsmittel sowie als Fixiermittel auf dem Gebiet der Papierherstellung verwendet. Für diese Einsatzzwecke dürfen die Polymeren keine physiologisch bedenklichen Verunreinigungen enthalten. Die den Polymeren zugrundeliegenden Monomeren weisen in Abhängigkeit von der Herstellung nitrilgruppenhaltige Verunreinigungen, wie beispielsweise Milchsäurenitril oder Formylalaninnitril, auf. Diese Verunreinigungen können bei der Herstellung von beispielsweise N-Vinylformamid in technischem Maßstab nicht mit vertretbarem Aufwand, beispielsweise mit Hilfe einer Destillation abgetrennt werden. Da die nitrilgruppenenthaltenen Verunreinigungen keine Doppelbindungen aufweisen, werden sie bei der radikalischen Polymerisation der N-Vinylcarbonsäureamide praktisch nicht verändert. Wie aus den obengenannten Literaturstellen bekannt ist, werden Vinylamineinheiten enthaltende Polymerisate vorzugsweise durch Hydrolyse von N-Vinylcarbonsäureamideinheiten enthaltenden Homo- oder Copolymerisaten hergestellt. Bei der sauren Hydrolyse von Poly-N-vinylcarbonsäureamiden, die mit Nitrilgruppen aufweisenden Verbindungen verunreinigt sind, entsteht Cyanwasserstoff, der vor Anwendung der Polymerisate unbedingt zerstört werden muß.

Aus der EP-B-0 032 248 ist ein Verfahren zur Entgiftung von cyanidhaltigen Abwässern und Reaktionslösungen durch Umsetzung mit Wasserstoffperoxid in Gegenwart von Schwefel oder schwefelabspaltenden Verbindungen wie Natriumthiosulfat, bekannt. Freien Schwefel enthaltende Polymerisate sind jedoch bei der Papierherstellung unerwünscht.

Aus der EP-A-0 422 536 ist bekannt, daß bei Einwirkung von Wasserstoffperoxid auf Carboxylgruppen enthaltende Polymerisate ein Molekulargewichtsabbau der Polymerisate eintritt. Die durch Oxidation abgebauten Polymerisate werden als Zusatz zu Waschmitteln eingesetzt.

Der vorliegenden Erfindung liegt die Aufgabe zugrunde, nitrilgruppenhaltige Verunreinigungen aus Polymerisaten, die acyclische N-Vinylcarbonsäureamid- und/oder Vinylamineinheiten enthalten, möglichst vollständig zu entfernen, ohne daß die Polymerisate sich wesentlich verändern.

Die Aufgabe wird erfindungsgemäß gelöst mit einem Verfahren zur Eliminierung von nitrilgruppenhaltigen Verunreinigungen aus Polymerisaten, die acyclische N-Vinylcarbonsäureamid- und/oder Vinylamineinheiten enthalten, wenn man die genannten, nitrilgruppenhaltige Verunreinigungen aufweisenden Polymerisate mit mindestens einem Oxidationsmittel unter Lichteinwirkung und/oder in Gegenwart von Schwermetallionen behandelt.

In einer Ausführungsform des erfindungsgemäßen Verfahrens behandelt man nitrilgruppenhaltige Verunreinigungen aufweisende Polymerisate des N-Vinylformamids oder der daraus durch Hydrolyse herstellbaren Vinylamineinheiten enthaltenden Polymerisate in Form einer Lösung oder Emulsion mit Wasserstoffperoxid unter Einwirkung von UV-Strahlung. In einer weiteren Ausgestaltung des erfindungsgemäßen Verfahrens behandelt man nitrilgruppenhaltige Verunreinigungen aufweisende Polymerisate des N-Vinylformamids oder der daraus durch Hydrolyse herstellbaren Vinylamineinheiten enthaltenden Polymerisate in Form einer wäßrigen Lösung oder Emulsion mit Wasserstoffperoxid und Eisen-II-Salzen. Die Behandlung erfolgt vorzugsweise bei Temperaturen von 50 - 90°C. Während der oxidativen Behandlung der Polymerisate beträgt der pH-Wert des wäßrigen Mediums vorzugsweise 5 bis 8.

Polymerisate, die acyclische N-Vinylcarbonsäureamid- und/oder Vinylamineinheiten enthalten, sind bekannt. Wie oben bereits ausgeführt, enthalten sie, falls die Monomeren nicht einer aufwendigen Reinigung unterzogen wurden, nitrilgruppenhaltige Verbindungen als Verunreinigungen. Ihr Anteil im Polymerisat kann bis zu 1 Gew.-% betragen und liegt in den meisten Fällen bei 0,001 bis 0,1 Gew.-%. Die Herstellung von Polyvinylaminhydrochlorid ist beispielsweise aus der US-A-2 721 140 bekannt. Partiell hydrolysierte Homopolymerisate von N-Vinylformamid sind aus der eingangs zitierten US-A-4 421 602 bekannt. Copolymerisate aus acyclischen N-Vinylcarbonsäureamiden und anderen monoethylenisch ungesättigten Monomeren sind aus der EP-A-0 216 387 bekannt. Außerdem sind Copolymerisate aus N-Vinylcarbonsäureamiden und monoethylenisch ungesättigten Carbonsäuren bekannt, vgl. EP-A-0 438 744. Das erfindungsgemäße Verfahren ist auf alle Polymerisate anwendbar, die acyclische N-Vinylcarbonsäuremide einpolymerisiert enthalten oder auf ihre Hydrolyseprodukte. Unter acyclischen N-Vinylcarbonsäureamiden sollen Verbindungen der Formel 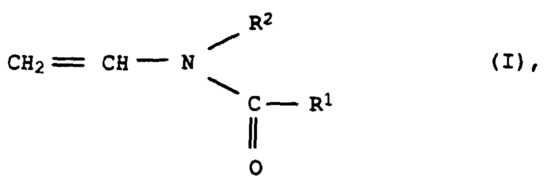 in der R¹, R² gleich oder verschieden sind und H oder C₁- bis C₆-Alkyl bedeuten, verstanden werden. Geeignete Monomere sind beispielsweise N-Vinylformamid, N-Vinyl-N-methylformamid, N-Vinylacetamid, N-Vinyl-N-methylacetamid, N-Vinyl-N-ethylacetamid, N-Vinyl-N-methylpropionamid und N-Vinylpropionamid.

Aus den obengenannten Monomeren können Homopolymerisate oder auch Copolymerisate hergestellt werden, z.B. Copolymerisate aus N-Vinylformamid und N-Vinylacetamid. Die oben beschriebenen N-Vinylcarbonsäureamide sind in allen Verhältnissen miteinander copolymerisierbar. Bei der Hydrolyse der aus diesen Monomeren erhältlichen Homo- oder Copolymerisate entstehen Vinylamineinheiten enthaltende Polymerisate, die bei einer partiellen Hydrolyse noch N-Vinylcarbonamideinheiten enthalten. Die oben angegebenen acyclischen N-Vinylcarbonsäureamide werden im folgenden als Monomere der Gruppe a) bezeichnet. Sie können zusammen mit anderen ethylenisch ungesättigten Monomeren copolymerisiert werden.

Für die Copolymerisation eignen sich als Monomere der Gruppe b) beispielsweise monoethylenisch ungesättigte Carbonsäuren mit 3 bis 8 C-Atomen sowie die wasserlöslichen Salze dieser Monomeren.

Zu dieser Gruppe von Monomeren gehören beispielsweise Acrylsäure, Methacrylsäure, Dimethylacrylsäure, Ethacrylsäure, Maleinsäure, Citraconsäure, Methylenmalonsäure, Allylessigsäure, Vinylessigsäure, Crotonsäure, Fumarsäure, Mesaconsäure und Itaconsäure. Aus dieser Gruppe von Monomeren verwendet man vorzugsweise Acrylsäure, Methacrylsäure, Maleinsäure oder auch Mischungen der genannten Carbonsäuren, insbesondere Mischungen aus Acrylsäure und Maleinsäure oder Mischungen aus Acrylsäure und Methacrylsäure. Die Monomeren der Gruppe b) können entweder in Form der freien Carbonsäuren, in partiell oder in vollständig mit Basen neutralisierter Form, z.B. mit Natronlauge, Kalilauge, Calciumhydroxid oder Ammoniak, polymerisiert werden.

Weitere geeignete Monomere der Gruppe b) sind beispielsweise die Ester, Amide und Nitrile der unter b) angegebenen Carbonsäuren, z.B. Acrylsäuremethylester, Acrylsäureethylester, Methacrylsäuremethylester, Methacrylsäureethylester, Hydroxyethylacrylat, Hydroxypropylacrylat, Hydroxybutylacrylat, Hydroxyethylmethacrylat, Hydroxypropylmethacrylat, Hydroxyisobutylacrylat, Hydroxyisobutylmethacrylat, Maleinsäuremonomethylester, Maleinsäuredimethylester, Maleinsäuremonoethylester, Maleinsäurediethylester, 2-Ethylhexylacrylat, 2-Ethylhexylmethacrylat, Acrylamid, Methacrylamid, N,N-Dimethylacrylamid, N-tertiär-Butylacrylamid, Acrylnitril, Methacrylnitril, Dimethylaminoethylacrylat, Dimethylaminoethylmethacrylat, Diethylaminoethylacrylat, Diethylaminoethylmethacrylat, Dimethylaminopropylmethacrylamid sowie die Salze der zuletzt genannten Monomeren mit Carbonsäuren oder Mineralsäuren sowie die quaternierten Produkte.

Außerdem eignen sich als Monomere der Gruppe b) Acrylamidoglykolsäure, Vinylsulfonsäure, Allylsulfonsäure, Methallylsulfonsäure, Styrolsulfonsäure, Acrylsäure-(3-sulfopropyl)ester, Methacrylsäure-(3-sulfopropyl)ester und Acrylamidomethylpropansulfonsäure sowie Phosphonsäuregruppen enthaltende Monomere, wie Vinylphosphat, Allylphosphat und Acrylamidomethylpropanphosphonsäure. Weitere geeignete Verbindungen dieser Gruppe sind N-Vinylpyrrolidon, N-Vinylcaprolactam, N-Vinyl-2-methylimidazolin, Diallyldimethylammoniumchlorid, Vinylacetat und Vinylpropionat. Es ist selbstverständlich auch möglich, Mischungen der genannten Monomeren der Gruppe b) einzusetzen, z.B. Mischungen aus Acrylester und Vinylacetat, Mischungen aus verschiedenen Acrylestern, Mischungen aus Acrylestern und Acrylamid oder Mischungen aus Acrylamid und Hydroxyethylacrylat oder Mischungen aus Vinylacetat und Acrylnitril.

Von den Monomeren der Gruppe b) verwendet man vorzugsweise Acrylamid, Acrylnitril, Vinylacetat, N-Vinylpyrrolidon, N-Vinylimidazol, Acrylsäure, Methacrylsäure, Maleinsäure oder Mischungen aus diesen Monomeren, z.B. Mischungen aus Acrylamid und Vinylacetat oder Mischungen aus Acrylamid und Acrylnitril. Die Monomeren der Gruppe b) können in den Copolymerisaten aus a) und b) beispielsweise zu 1 bis 99 Mol-% in einpolymerisierte Form vorliegen.

Die Copolymerisate aus den Monomeren a) und b) können weiterhin dadurch modifiziert werden, daß man die Polymerisation in Gegenwart von Monomeren der Gruppe c) vornimmt, bei der es sich um Verbindungen handelt, die mindestens zwei ethylenisch ungesättigte nicht konjugierte Doppelbindungen im Molekül aufweisen. Die Mitverwendung der Monomeren c) bei der Copolymerisation bewirkt eine Erhöhung der K-Werte der Copolymerisate. Geeignete Verbindungen der Gruppe c) sind beispielsweise Methylenbisacrylamid, Ester von Acrylsäure und Methacrylsäure mit mehrwertigen Alkoholen, wie Glycerintrimethacrylat sowie mindestens zweifach mit Acrylsäure oder Methacrylsäure veresterte Polyethylenglykole oder Polyole, wie Pentaerythrit und Glucose. Geeignete Vernetzer sind außerdem Divinylbenzol, Divinyldioxan, Pentaerythrittriallylether und Pentaallylsucrose. Vorzugsweise verwendet man aus dieser Gruppe von Verbindungen wasserlösliche Monomere, wie Glykoldiacrylat oder Glykoldiacrylate von Polyethylenglykolen eines Molekulargewichts bis zu 3 000. Sofern die Monomeren der Gruppe c) zur Modifizierung der Copolymerisate eingesetzt werden, betragen die angewendeten Mengen beispielsweise bis zu 2 Mol-%. Sie sind dann vorzugsweise zu 0,01 bis 1 Mol-% in den Copolymerisaten in einpolymerisierter Form enthalten.

Die Herstellung der Copolymerisate erfolgt nach bekannten Verfahren, z.B. der Lösungs-, Fällungs-, Suspensions- oder Emulsionspolymerisation unter Verwendung von Verbindungen, die unter den Polymerisationsbedingungen Radikale bilden. Die Polymerisationstemperaturen liegen üblicherweise in dem Bereich von 30 bis 200, vorzugsweise 40 bis 110°C. Geeignete Initiatoren sind beispielsweise Azo- und Peroxyverbindungen sowie die üblichen Redoxinitiatorsysteme, wie Kombinationen aus Wasserstoffperoxyd und reduzierend wirkenden Verbindungen, z.B. Natriumsulfit, Natriumbisulfit, Natriumformaldehydsulfoxilat und Hydrazin. Diese Systeme können gegebenenfalls zusätzlich noch geringe Mengen eines Schwermetallsalzes enthalten. Als Polymerisationsinitiator werden vorzugsweise wasserlösliche Azoverbindungen, wie 2,2'-Azobis(2-methylpropionamidin)dihydrochlorid, 2,2'-Azo-bis-(4-Methoxy-2,4-dimethylvaleronitril) und 2,2'-Azobis-(2-methyl-N-phenylpropionamidin) dihydrochlorid verwendet.

Um niedrigmolekulare Copolymerisate herzustellen, führt man die Copolymerisation in Gegenwart eines Reglers durch. Geeignete Regler sind beispielsweise sekundäre Alkohole, wie Isopropanol und sek.-Butanol, Hydroxylamin, Ameisensäure sowie Mercaptoverbindungen, wie Mercaptoethanol, Mercaptopropanol, Mercaptobutanol, Thioglykolsäure, Thiomilchsäure, tert.-Butylmercaptan, Octylmercaptan und Dodecylmercaptan. Die Regler werden üblicherweise in Mengen von 0,01 bis 5 Gew.-%, bezogen auf die eingesetzten Monomeren, angewendet. Sofern man sekundäre Alkohole als Regler verwendet, kann die Polymerisation auch in Gegenwart wesentlich größerer Mengen erfolgen, z.B. in Mengen bis zu 80 Gew.-%, bezogen auf die Monomeren. In diesen Fällen sind die sekundären Alkohole gleichzeitig Lösemittel für die Monomeren.

Die so erhältlichen Copolymerisate haben K-Werte von 10 bis 300, vorzugsweise 30 bis 250. Die K-Werte werden bestimmt nach H. Fikentscher in 5 %iger wäßriger Kochsalzlösung bei pH 7, 25°C und einer Polymerkonzentration von 0,1 Gew.-%.

Aus den oben beschriebenen Copolymerisaten können die Formylgruppen durch Hydrolyse unter Bildung von Vinylamineinheiten gemäß dem folgenden Formelschema abgespalten werden:

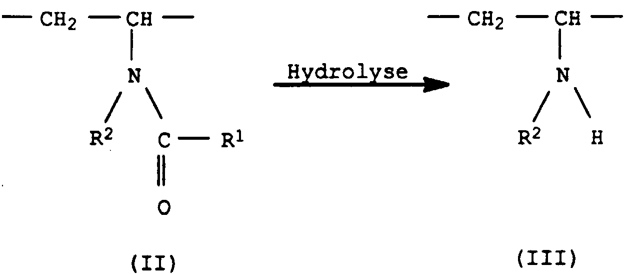

In den Formeln (II) und (III) können die Substituenten R¹ und R² gleich oder verschieden sein und für H oder eine C₁- bis C₆-Alkylgruppe stehen. In Abhängigkeit von den bei der Hydrolyse gewählten Reaktionsbedingungen erhält man entweder eine partielle oder vollständige Hydrolyse der Einheiten II. Die Hydrolyse wird so weit geführt, daß 1 bis 100, vorzugsweise 30 bis 95 %, der in das Copolymerisat einpolymerisierten Monomeren a) hydrolysiert sind. Bei der Hydrolyse von Vinylformamid-Einheiten enthaltenden Copolymerisaten kann der Hydrolysegrad beispielsweise durch Polyelektrolyttitration oder durch enzymatische Analyse der freigesetzten Ameisensäure bestimmt werden. Sofern die Copolymerisate außer den Monomeren a) noch hydrolysierbare Monomere einpolymerisiert enthalten, so können auch diese einpolymerisierten Monomeren je nach gewählter Hydrolysebedingung chemisch verändert werden, z.B. entstehen aus Vinylacetat-Einheiten Vinylalkohol-Einheiten, aus Acrylsäuremethylester-Einheiten Acrylsäure-Einheiten und aus Acrylnitril-Einheiten Acrylamid- bzw. Acrylsäure-Einheiten.

Als Hydrolysemittel eignen sich vor allem Mineralsäuren, wie Halogenwasserstoffe, die gasförmig oder in wäßriger Lösung eingesetzt werden können. Vorzugsweise verwendet man Salzsäure, Schwefelsäure, Salpetersäure und Phosphorsäure sowie organische Säuren, wie C₁- bis C₅-Carbonsäuren und aliphatische oder aromatische Sulfonsäuren. Der pH-Wert bei der sauren Hydrolyse beträgt -1 bis 5, vorzugsweise 0 bis 2. Pro Formylgruppenäquivalent, das aus den einpolymerisierten Einheiten II abgespalten werden soll, benötigt man z.B. 0,05 bis 2, vorzugsweise 1 bis 1,5 Moläquivalente einer Säure.

Die Hydrolyse der einpolymerisierten Einheiten der Struktur II kann auch mit Hilfe von Basen vorgenommen werden, z.B. von Metallhydroxyden, insbesondere von Alkalimetall- und Erdalkalimetallhydroxyden. Vorzugsweise verwendet man Natriumhydroxyd oder Kaliumhydroxd. Die Hydrolyse kann ggfs. auch in Gegenwart von Ammoniak oder Aminen durchgeführt werden.

Besonders bewährt hat sich die Hydrolyse der Copolymerisate in wäßriger Lösung oder Suspension bei Reaktionstemperaturen von 20 bis 100°C. Sofern die nicht hydrolysierten Copolymerisate in Wasser schwer löslich sind, lösen sie sich in aller Regel mit fortschreitender Hydrolyse im Reaktionsmedium auf. Im Anschluß an eine sauer durchgeführte Hydrolyse wird das Reaktionsgemisch gegebenenfalls mit Basen, vorzugsweise Natronlauge, neutralisiert. Falls die Hydrolyse mit Basen durchgeführt worden ist, kann das Reaktionsgemisch gegebenenfalls durch Zusatz von Säuren, vorzugsweise von Salzsäure, neutralisiert werden. Die pH-Werte des Reaktionsgemisches können nach der Hydrolyse zwischen 1 und 10, vorzugsweise zwischen 3 und 8, liegen. Je nach Zusammensetzung können die hydrolysierten Copolymerisate in bestimmten pH-Bereichen schwer löslich sein. Der K-Wert der hydrolysierten Copolymerisate beträgt beispielsweise 10 bis 300, vorzugsweise 15 bis 200 (gemessen in 5 %iger wäßriger Kochsalzlösung bei einer Polymerkonzentration von 0,1 Gew.-%, einem pH-Wert von 5 und einer Temperatur von 25°C).

Sowohl die nichthydrolysierten als auch die hydrolysierten Polymerisate von acyclischen N-Vinylcarbonsäureamiden weisen nitrilgruppenhaltige Verunreinigungen auf. Hierbei kann es sich sowohl um Nitrile wie Formylalaninnitril oder Milchsäurenitril oder andere gesättigte Nitrile, die nicht identifiziert wurden, sowie um Cyanwasserstoff handeln. Die hydrolysierten acyclischen N-Vinylcarbonsäureamidpolymerisate enthalten neben Nitrilen vor allem Cyanwasserstoff, der bei der Hydrolyse aus den Nitrilen entsteht. Die Bestimmung des Nitrilgehalts der Polymerlösungen wird mit Hilfe der argentometrischen Titration nach Liebig mit Silberionen im alkalischen Milieu bei pH-Werten oberhalb von 10 durchgeführt. In diesem pH-Bereich werden sowohl Cyanidionen als auch nitrilgruppenhaltige Verbindungen wie leicht spaltbare Cyanhydrine, z.B. Milchsäurenitril, erfaßt. Als Titriermittel wird 0,001 bis 0,01 n-Silbernitratlösung eingesetzt. Der Endpunkt der Titration wird potentiometrisch an einer Silberelektrode ermittelt. Die Anwesenheit von Cyanwasserstoff im Gasraum über einer Polymerlösung in einem Behälter kann qualitativ gemäß der Lehre der US-A-2 573 248 mit Hilfe eines Testpapiers sicher nachgewiesen werden. Die Reaktion ist sehr empfindlich und spricht selbst bei Cyanwasserstoffmengen von 1 ppm noch an.

Um die nitrilgruppenhaltigen Verunreinigungen aus den nichthydrolysierten und den hydrolysierten Polymerisaten zu entfernen, behandelt man die Polymerisate mit mindestens einem Oxidationsmittel unter Lichteinwirkung und/oder in Gegenwart von Schwermetallionen. Als Oxidationsmittel können Sauerstoff, Ozon oder andere Oxidationsmittel, die den Sauerstoff chemisch gebunden enthalten, angewendet werden. Als andere Oxidationsmittel kommen beispielsweise Verbindungen in Frage, die beim Erhitzen allein oder in Gegenwart von Katalysatoren Sauerstoff freisetzen. Geeignete organische Verbindungen sind im allgemeinen Peroxide, die sehr leicht aktiven Sauerstoff abspalten. Bei niedrigen Temperaturen haben nur Hydroperoxide und Persäuren eine deutlich oxidierende Wirkung, Perester, Diacylperoxide und Dialkylperoxide wirken erst bei höheren Temperaturen. Geeignete Peroxide sind beispielsweise Diacetylperoxid, Isopropylpercarbonat, tert.-Butylhydroperoxid, Cumolhydroperoxid, Acetylacetonperoxid, Methylethylketonperoxid, Di-tert.-Butylperoxid, Dicumolperoxid, tert.-Butylperpivalat, tert.-Butylperoctanoat und tert.-Butylperethylhexanoat. Bevorzugt sind die preisgünstigen anorganischen Oxidationsmittel, die sich besonders gut für die Oxidation von wäßrigen Lösungen, Emulsionen oder Dispersionen von Vinylcarbonsäureamid- und/oder Vinylamingruppen enthaltenden Polymerisaten eignen. Beispielhaft genannt seien Chlor, Brom, Jod, Salpetersäure, Kaliumpermanganat, Kaliumchlorat, Natriumhypochlorit, Natriumperborat, Natriumpercarbonat und Natriumpersulfat. Ein besonders bevorzugtes Oxidationsmittel ist Wasserstoffperoxid. Der Zerfall der Perverbindungen kann durch den Zusatz von Beschleunigern oder Aktivatoren forciert werden. Diese Beschleuniger oder Aktivatoren sind reduzierend wirkende, leicht Elektronen abgebende Stoffe, wie beispielsweise Amine, Sulfinsäuren, Dithionite, Sulfite, α- und β-Ketocarbonsäuren und Glukosederivate. Beispiele für solche Verbindungen sind Dimethylanilin, Dimethyl-p-toluidin, Diethylanilin, Natriumdithionit, Natriumsulfit, Ascorbinsäure, Glukose und Pentaacetylglukose.

Die Oxidationsmittel werden, bezogen auf die nitrilgruppenhaltigen Verunreinigungen, mindestens in äquimolaren Mengen angewendet. Bezogen auf die Polymeren bedeutet dies, daß die Oxidationsmittel beispielsweise in Mengen von 0,01 bis 5, vorzugsweise 0,05 bis 1 Gew.-%, bezogen auf die Polymeren eingesetzt werden. Sofern zur Aktivierung der Oxidationsmittel noch ein Reduktionsmittel mitverwendet wird, so betragen die Mengen an Reduktionsmittel, berechnet auf Oxidationsmittel, 1 bis 50 Gew.-%.

Die alleinige Einwirkung eines Oxidationsmittels auf die nitrilgruppenhaltigen Verunreinigungen verläuft zu langsam bzw. erfordert höhere Temperaturen. Bei höheren Temperaturen tritt jedoch eine unerwünschte Schädigung der zu reinigenden Polymerisate ein. Daher werden die von den nitrilgruppenhaltigen Verbindungen zu reinigenden Polymerisate mit mindestens einem Oxidationsmittel und zusätzlich unter Lichteinwirkung behandelt. Unter Lichteinwirkung soll vor allem die Einwirkung von UV-Strahlung auf das zu reinigende Polymerisat verstanden werden. Hierfür eignen sich alle in der Technik gebräuchlichen UV-Strahlungsquellen, z.B. energiereiche UV-Lampen wie Kohlenbogenlampen, Quecksilberdampflampen oder Xenonlampen und UV-arme Lichtquellen wie Leuchtstoffröhren mit hohem Blauanteil sowie Sonnenlicht.

Um die nitrilgruppenhaltigen Verbindungen aus den zu reinigenden Polymerisaten zu entfernen, kann man die Oxidationsmittel auch in Gegenwart von Schwermetallionen auf die zu reinigenden Polymerisate einwirken lassen. Geeignete Schwermetallionen leiten sich beispielsweise von Eisen, Kupfer, Chrom, Mangan, Nickel, Kobalt, Vanadium und Cer ab. Diese Ionen können beispielsweise als Acetylacetonatkomplexe oder in Form der Salze, z.B. Eisen-II-Sulfat, Eisen-II-Ammonsulfat, Kupferchlorid oder Kupfersulfat, eingesetzt werden. Besonders bevorzugt ist die Verwendung von Eisen-II-Salzen als Schwermetallionen. Die Schwermetallionen werden beispielsweise in Mengen von 0,1 bis 100, vorzugsweise 0,5 bis 20 ppm, bezogen auf die zu reinigenden Polymeren, eingesetzt. Sofern Oxidationsmittel und Schwermetallionen zur Entfernung der nitrilgruppenhaltigen Verunreinigungen eingesetzt werden, kann die Reaktion auch ohne Einwirkung von Licht durchgeführt werden. Eine weitere Beschleunigung ergibt sich jedoch durch Lichteinwirkung, insbesondere durch Einwirkung von UV-Strahlung. Die Reaktionstemperatur kann beispielsweise 5 bis 100, vorzugsweise 50 bis 90°C betragen.

Um die nitrilgruppenhaltigen Verunreinigungen in den Polymerisaten zu zerstören, läßt man die Oxidationsmittel a) unter Lichteinwirkung und/oder b) in Gegenwart von Schwermetallionen entweder direkt auf die pulverförmigen Polymerisate einwirken oder auf Suspensionen bzw. Emulsionen der Polymerisate in einem inerten Suspensionsmittel oder auf Lösungen der Polymerisate in inerten Lösemitteln. Als Lösemittel für die Polymerisate kommen beispielsweise Methanol, Ethanol, n-Propanol, Isopropanol, Wasser und Lösemittelmischungen in Betracht, die Wasser enthalten. Vorzugsweise wird die Oxidation der Verunreinigungen in wäßrigen Polymerlösungen, Emulsionen oder Dispersionen durchgeführt. Hierbei stellt man beispielsweise einen pH-Wert der zu behandelnden Lösung von 4 bis 12, vorzugsweise 5 bis 8 ein. Die erfindungsgemäße Eliminierung von nitrilgruppenhaltigen Verunreinigungen aus den genannten Polymerisaten ist beispielsweise nach einer Einwirkungszeit von 5 Minuten bis zu 10 Stunden beendet. Da die Oxidationsmittel im Überschuß eingesetzt werden, werden sie vorzugsweise nach der Behandlung der Polymerlösungen zerstört. Dies kann beispielsweise dadurch geschehen, daß man geeignete Reduktionsmittel zusetzt, beispielsweise Natriumsulfit, Natriumhydrogensulfit, Natriumdithionit, Natriumphosphit, Natriumhydrogenphosphit, Natriumhypophosphit oder Ascorbinsäure. Nicht verbrauchtes Wasserstoffperoxid, das bevorzugt als Oxidationsmittel eingesetzt wird, läßt sich besonders einfach enzymatisch mit Hilfe von Katalase entfernen.

Die erfindungsgemäß behandelten Polymerisate, die acyclische N-Vinylcarbonsäureamid- und/oder Vinylamineinheiten enthalten, weisen entweder keine oder nur noch Spuren an nitrilgruppenhaltigen Verunreinigungen auf, die bei der weiteren Verarbeitung der Polymerisate nicht mehr stören. Die Polymerisate werden bei der Eliminierung der nitrilgruppenhaltigen Verunreinigungen praktisch nicht verändert. Sie sind in den bisher geprüften Fällen bei der Verwendung als Retentions- und Verfestigungsmittel für Papier ebenso wirksam wie die unbehandelten Polymerisate.

In den Beispielen wurden die K-Werte nach der in der Beschreibung angegebenen Literaturstelle H. Fikentscher bestimmt. Die Viskosität der Copolymerisate wurde in einem Brookfieldviskosimeter bei 20 U/min und einer Temperatur von 23°C gemessen.

### Beispiel 1

In einem Reaktor aus Glas, der mit einem Rührer versehen ist, werden 650 g einer 15,2 %igen wäßrigen Lösung eines Polyvinylformamids vom K-Wert 82,6, einem pH-Wert von 6,7, einer Viskosität von 5500 mPa·s und einem nach Liebig titrierbaren CN-Gehalt von 74,3 ppm in einem schwachen Stickstoffstrom auf eine Temperatur von 70°C erhitzt. Sobald diese Temperatur erreicht ist, setzt man unter Rühren 0,98 g 50 %iges Wasserstoffperoxid zu und rührt das Reaktionsgemisch 2 Stunden bei 70°C unter der Einwirkung von Tageslicht. Danach läßt man das Reaktionsgemisch abkühlen. Der Feststoffgehalt der wäßrigen Polymerlösung beträgt 15,0 % und die Viskosität 5300 mPa·s. Das Polymer hat einen K-Wert von 82,3. Nitril war nicht mehr nachweisbar.

Um das restliche Wasserstoffperoxid zu zerstören, gab man 0,4 g Natriumhydrogensulfit zur Polymerlösung. Das Polymerisat wurde anschließend 5 Stunden auf eine Temperatur von 70°C mit der 1,2-fachen molaren Menge an Salzsäure erhitzt. Nach der Hydrolyse konnte weder in der Lösung noch im Gasraum Cyanid nachgewiesen werden.

### Beispiel 2

In einem Reaktor aus Edelstahl, der mit einem Rührer und Dosiervorrichtungen versehen ist, werden 1200 g einer 15,8 %igen wäßrigen Lösung eines Polyvinylformamids vom K-Wert 82,4, einem pH-Wert von 6,5, einer Viskosität von 6200 mPa·s und einem nach Liebig titrierbaren Cyanidgehalt von 17 ppm im Stickstoffstrom auf 80°C erhitzt. Nachdem diese Temperatur erreicht ist, setzt man 5 g einer 0,1 %igen wäßrigen Lösung von Eisen(II)sulfat und anschließend 1,836 g 50 %iges Wasserstoffperoxid zu, rührt das Reaktionsgemisch 2 Stunden bei 80°C und läßt es danach abkühlen. Die wäßrige Lösung hat einen Feststoffgehalt von 15,6 % und eine Viskosität von 6100 mPa·s. Der K-Wert des Polymeren beträgt 82,0 und der nach Liebig titrierbaren Nitrilgehalt weniger als 1 ppm.

Das Polyvinylformamid wird anschließend durch Zugabe der 1,2-fachen Menge an Salzsäure und Erhitzen auf 70°C für 5 Stunden hydrolysiert. Über dem Gasraum der wäßrigen Lösung des hydrolysierten Polymerisats ist kein Cyanwasserstoff nachweisbar. Die Polymerlösung enthält ca. 1 ppm titrierbares Nitril.

### Beispiel 3

In dem in Beispiel 2 beschriebenen Reaktor werden 1200 g einer 15,8 %igen wäßrigen Lösung eines Polyvinylformamids vom K-Wert 82,4, einem pH-Wert von 6,5, einer Viskosität von 6200 mPa·s und einem nach Liebig titrierbaren CN-Gehalt von 17 ppm im Stickstoffstrom auf eine Temperatur von 50°C erhitzt. Bei dieser Temperatur fügt man 1,836 g 50 %iges Wasserstoffperoxid zu und rührt das Reaktionsgemisch unter Einwirkung von UV-Licht 1 Stunde bei 50°C. Nach dieser Zeit sind in der Polymerlösung noch 2 ppm titrierbares Nitril nachweisbar. Im Gasraum konnte kein Cyanwasserstoff nachgewiesen werden.

### Beispiel 4

In einem Reaktor aus Glas, der mit einem Rührer und einer Dosiervorrichtung ausgestattet ist, werden 500 g einer wäßrigen 6 %igen Lösung eines vollständig hydrolysierten Copolymeren aus N-Vinylformamid und Vinylacetat, das Vinylamin- und Vinylalkoholeinheiten im Molverhältnis 3:1 enthält, vorgelegt. Die wäßrige Lösung hat einen pH-Wert von 6, eine Viskosität von 3000 mPa·s und einen titrierbaren CN-Gehalt von 39 ppm. Der K-Wert des Copolymeren beträgt 122. Man fügt 1,5 g einer 0,1 %igen wäßrigen Eisen(II)sulfat-Lösung und 0,9 g 30 %iges Wasserstoffperoxid zu und erhitzt das Reaktionsgemisch unter ständigem Rühren 4 Stunden auf eine Temperatur von 70°C in schwachem Stickstoffstrom. Nach dem Abkühlen beträgt die Viskosität der wäßrigen Polymerlösung 2950 mPa·s. Das Copolymerisat hat einen K-Wert von 122 und einen Nitrilgehalt von weniger als 3 ppm. Das überschüssige Wasserstoffperoxid wird anschließend durch Zusatz von 4 g einer 30 %igen Natriumhydrogensulfitlösung zerstört.

## Patentansprüche

1. Verfahren zur Eliminierung von nitrilgruppenhaltigen Verunreinigungen aus Polymerisaten, die acyclische N-Vinylcarbonsäureamid- und/oder Vinylamineinheiten enthalten, dadurch gekennzeichnet, daß man die genannten, nitrilgruppenhaltige Verunreinigungen aufweisenden Polymerisate mit mindestens einem Oxydationsmittel und a) unter Lichteinwirkung und/oder b) in Gegenwart von Schwermetallionen behandelt.

2. Verfahren nach Anspruch 1, dadurch gekennzeichnet, daß man nitrilgruppenhaltige Verunreinigungen aufweisende Polymerisate des N-Vinylformamids oder der daraus durch Hydrolyse herstellbaren Vinylamineinheiten enthaltenden Polymerisate in Form einer Lösung oder Emulsion mit Wasserstoffperoxid unter Einwirkung von UV-Strahlung behandelt.

3. Verfahren nach Anspruch 1 oder 2, dadurch gekennzeichnet, daß man nitrilgruppenhaltige Verunreinigungen aufweisende Polymerisate des N-Vinylformamids oder der daraus durch Hydrolyse herstellbaren Vinylamineinheiten enthaltenden Polymerisate in Form einer wäßrigen Lösung oder Emulsion mit Wasserstoffperoxid und Eisen-II-salzen behandelt.

4. Verfahren nach einem der Ansprüche 1 bis 3, dadurch gekennzeichnet, daß man die Behandlung bei Temperaturen von 50 bis 90°C durchführt.

5. Verfahren nach einem der Ansprüche 1 bis 4, dadurch gekennzeichnet, daß man die Behandlung in einem wäßrigen Medium bei pH-Werten von 5 bis 8 durchführt.

## Claims

1. A process for eliminating nitrile impurities from polymers which contain acyclic N-vinylcarboxamide and/or vinylamine units, which comprises treating the said polymers which have nitrile impurities with at least one oxidizing agent and a) with exposure to light and/or b) in the presence of heavy metal ions.

2. A process as claimed in claim 1, wherein N-vinylformamide polymers, or polymers which contain vinylamine units and can be prepared therefrom by hydrolysis, which have nitrile impurities are treated in the form of a solution or emulsion with hydrogen peroxide with exposure to UV radiation.

3. A process as claimed in claim 1 or 2, wherein N-vinylformamide polymers, or polymers which contain vinylamine units and can be prepared therefrom by hydrolysis, which have nitrile impurities are treated in the form of an aqueous solution or emulsion with hydrogen peroxide and iron(II) salts.

4. A process as claimed in any of claims 1 to 3, wherein the treatment is carried out at from 50 to 90°C.

5. A process as claimed in any of claims 1 to 4, wherein the treatment is carried out in an aqueous medium at pH 5-8.

## Revendications

1. Procédé pour l'élimination d'impuretés contenant des groupements nitrile dans des polymères qui contiennent des motifs N-vinylcarboxamide et/ou vinylamine acycliques, caractérisé en ce que l'on traite lesdits polymères renfermant des impuretés contenant des groupements nitrile par un oxydant au moins et a) sous l'action de la lumière et/ou b) en présence d'ions de métaux lourds.

2. Procédé selon la revendication 1, caractérisé en ce que l'on traite, par du peroxyde d'hydrogène sous l'action de rayons UV, des polymères du N-vinylformamide qui renferment des impuretés contenant des groupements nitrile ou les polymères contenant des motifs vinylamine qui peuvent être préparés par hydrolyse à partir de ceux-ci, sous forme d'une solution ou d'une émulsion.

3. Procédé selon la revendication 1 ou 2, caractérisé en ce que l'on traite, par du peroxyde d'hydrogène et des sels de fer (II), des polymères du N-vinylformamide qui renferment des impuretés contenant des groupements nitrile ou les polymères contenant des motifs vinylamine qui peuvent être préparés par hydrolyse à partir de ceux-ci, sous forme d'une solution ou d'une émulsion aqueuse.

4. Procédé selon l'une quelconque des revendications 1 à 3, caractérisé en ce que l'on effectue le traitement à des températures de 50 à 90°C.

5. Procédé selon l'une quelconque des revendications 1 à 4, caractérisé en ce que l'on effectue le traitement dans un milieu aqueux à des pH de 5 à 8.
